# EUROPEAN PATENT SPECIFICATION

(11) **EP 2 952 766 B1**
(45) Date of publication and mention of the grant of the patent: **30.12.2020**
(21) Application number: 15170404.6
(22) Date of filing: 03.06.2015
(51) Int. Cl.: F16D 3/32, B21K 1/76

(54) **A DOUBLE CARDAN SHAFT WITH A CENTERING PIECE INTEGRATED WITH THE SPIDER CONNECTION BEARING AND METHOD OF MAKING THE SAME**
DOPPELTE GELENKWELLE MIT ZENTRIER-STÜCK, WELCHES IN DEM SPINNENVERBINDUNGSLAGER INTEGRIERT IST UND HERSTELLUNGSVERFAHREN
ARBRE À DOUBLE CARDAN AVEC UNE PIÈCE DE CENTRAGE INTÉGRÉE AVEC LE PALIER DE CONNEXION D'ARAIGNÉE ET PROCÉDÉ DE FABRICATION

(30) Priority: 06.06.2014 TR 201406539
(43) Date of publication of application: 09.12.2015
(73) Proprietor: Tirsan Kardan Sanayi Ve Ticaret Anonim Sirketi, Yunusemre/Manisa, 45030 (TR)
(72) Inventor: Koruk, Adnan, Manisa (TR); Tasan, Korkut, Manisa (TR); Deveci , Ömer, Manisa (TR); Davazli, Sebahattin, Manisa (TR); Dizlek, Mustafa Eren, Manisa (TR)

(56) References cited:
- FR-A- 1 422 280
- FR-A1- 2 502 528
- GB-A- 2 302 829
- US-A- 3 001 386

## Description

### Technical Field

The invention relates to self-centering double cardan joints which are used in the cardan shafts transmitting the rotational motion and moment and allow changing the axis of rotation in motor vehicles.

This invention relates to a centering body comprising integrated connection flanges which provide the spider arms to be embedded in the double cardan joints.

### Prior Art

Double cardan joints are preferred where sequentially interconnected two joints are available in case high joint angles are needed as a result of the fact that cardan joints are inadequate due to certain technical reasons. Although the double cardan joints provide transmission of rotational motion and torque under more joint angles and provide less angular velocity irregularity when compared to the traditional cardan joints, certain disadvantages restrict their area of use. Due to comprising an increased number of parts, self-centering double joints have a larger mass and peripheral diameter compared to the other joints. Having a large mass also causes more moment of inertia for the rotation of the joint. As a result of being formed by the sequential interconnection of the two joints, the length of the double joints on the axis of rotation of the cardan shaft is greater. In other words, the length (D1+D2+D3) in the double joints (See figure-4) is greater than the length (U1+U2) in the cardan joints (See figure-5). Of the cardan shafts with double joints and cardan joints to be formed in case the other parts are same, the one with cardan joints will be shorter. Due to the length (D1+D2+D3) in the double joints (See figure-4) is greater than the length (U1+U2) in the cardan joints , use of double joints in short cardan shaft applications creates certain drawbacks.

Length-related disadvantage of the double cardan shafts due to the structure thereof is attempted to be eliminated using various techniques. The most common application in the market aiming at shortening the length of the joint is a mechanical series or wing type (in the foreign sources) connection. With the use of such connections, the cardan shaft are connected in the place of use with parts having shorter axial distances than the traditional connection flanges. In other words, a connection with a shorter axis (M1) than the axis length (D1) of the yoke flange disposed on the double cardan joint is achieved. The counter connection piece matching with this component is again similarly designed with short axial distance, and whilst the lenght is D1 in traditional method; with mechanical connection the distance (M1+M4) can be packaged. (See figure-6 and 7)

Reducing the length of the connection piece also decreases the mass thereof. In this manner, the increasing mass and the effect of inertia can be reduced with the use of double joints.

In the prior art, mechanical connection system used in the self-centering cardan joints mainly for shortening the connection length and due to the other advantages is formed by connecting the spider bearings and the centering unit components.

Two surfaces of the mechanical type (wing type) spider bearing pieces are machined onto the spider arms in accordance with the mechanical connection for the mounting of the centering piece in the self-centering double joints formed in this technique. While one side of these machined surfaces is matched with the vehicle or with the counter piece on the other mechanism it is to be used, the other side is matched with the centering piece. As the centering and mechanical bearing pieces are positioned with this machining surface thereon, it is required that the surfaces be matched with each other by machining with fine tolerance. machining of the pieces with fine tolerances not only increases the production time and costs, but requires extra operation during mounting, as well.

In the patent search with respect to the prior art, the following patents given together with the numbers thereof are encountered. CN2417050Y, CN2672360Y, DE10036203A1, FR2798434A1, JP2004293790A, US3159013A and US4419086A. Furthermore, document FR 1 422 280 A discloses a centering body comprising the features of the preamble of claim 1.

### Description of the Invention

The object of the invention is to provide mechanically connected bearing bushes to be integrated with the centering piece instead of the embodiment consisting of two mechanically connected bearing bushes and the centering piece in the prior art.

The object of the invention is to reduce the number of the components in the construction as the spider connection bearing and the centering piece are integrated. Moreover, component machining steps are minimized with production of the component having a simplified geometry.

An object of the invention is to provide fitting of the spider body into the housing thereof when the bearings are not assembled so as to provide the integrated use of the centering piece with the spider bearing bushes. Otherwise, the mounting will be impossible. In the current mechanically connected components, the spider body cannot be fitted into the housing thereof even if the bearings are not assembled. In the embodiment according to the invention, in the area where bearing bushes are present, a material recess is provided at the surfaces facing the spider body and the spider is fitted between the flanges.

In the geometry of the state of the art, if there are not mounting recesses at the surfaces of the housing facing each other, the spider body cannot be fitted into the housing thereof. With the embodiment according to the invention thanks to the mounting recess, the spider body can be fitted between the flanges and the need for a fragmentary geometry in the prior art is eliminated. Another object of the invention is to present a one-piece structure instead of the structure consisting of three separate components in the prior art. Thereby, the production process, mounting process, labor costs and material costs are minimized.

Another object of the invention is to drill the connection flange bushing housings integrated with the centering body on the same axis and with the same cutter. Thereby, housings are formed on the same axis, with the same drill and at one time without the need for performing precision surface machining for the intersection of the bushing housing axis in the prior art.

To achieve the aforementioned objects, the invention comprises a centering body including the features of claim 1 or a production method including the features of claim 3.

### Figures to Facilitate Understanding of the Invention

Figure 1 is the representative view showing the mounting process steps of the spider to the centering piece according to the invention.
Figure 2 is the mounted state of the spider to the centering piece according to the invention and the representative view of the bearings when being mounted in the final step.
Figure 3 is the separate upper perspective view of the centering piece according to the invention.
Figure 3.1 is the separate lower perspective view of the centering piece according to the invention.
Figure 4 is the side mounted view of the double joints having a traditional connection.
Figure 5 is the side mounted view of the traditional spider joint.
Figure 6 is the side mounted view of the double joints having a mechanical type (wing style) connection flange which is introduced with the invention.
Figure 7 is the side mounted view of the counter piece and the double joints having a mechanical type (wing style) connection flange which is introduced with the invention.
Figure 7.1 is the perspective view showing the position of the centering piece used in the double cardan joints.
Figure 8 is the demounted view of the bearing bush which is modularly adapted to the centering piece used in the prior art.
Figure 9 is the adapted view of the bearing bush which is modularly adapted to the centering piece used in the prior art.
Figure 10 is the side mounted view of the structure used in the prior art together with the spider.

### Part Numbers

10. Double cardan joint
11. Centering body
12. Connection flange
13. Mechanical connection machining
14. Bearing bushing housing
15. Mounting recesses
16. Spider bearing
17. Spider body
18. Spider arm
19. Spherical bearing
20. Bearing bushing piece
21. Bearing housing
22. Curved surface
23. Reinforcement form

### Detailed Description of the Invention

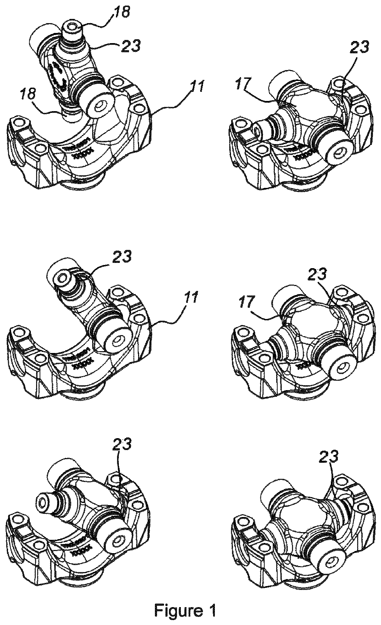

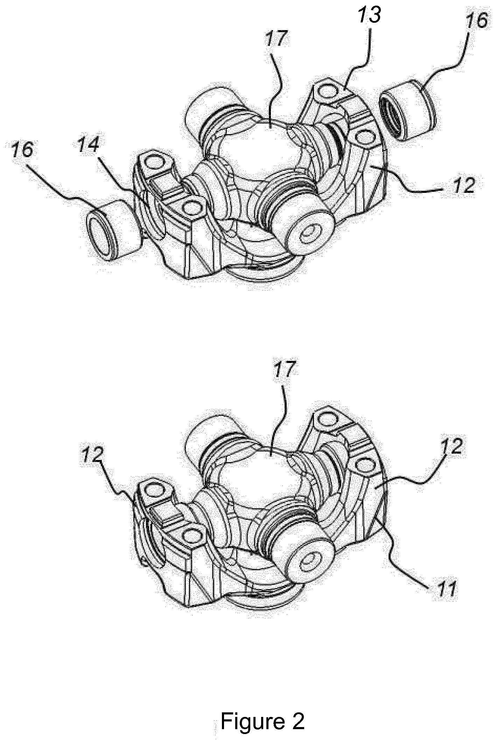

Mounting steps of the embodiment introduced with the invention are given in Figures 1 and 2 in detail.

In Figure 2, centering body (11) according to the invention and spider body (17) connected to the centering body (11) by using special type bearings (16) are illustrated. Formed are the connection flanges (12) with an extension integrated with said centering body (11) and the bearing bushing housings (14) formed for embedding spider arms (18) to said connection flanges (12).

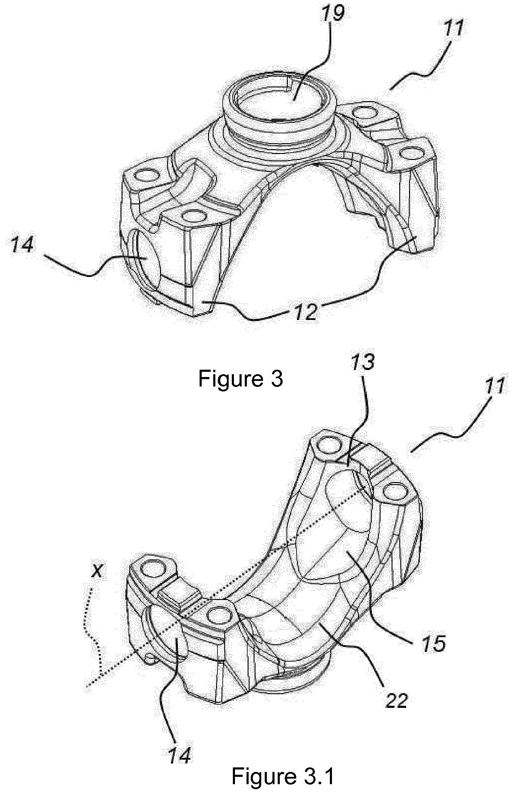

A mounting recess (15) which allows for mounting is formed for positioning the spider body (17) and spider arms (18) and around said bearing bushing housings (14). (See Figure 3). The most effective point of the invention is that the spider body (17) can be fitted between the bearing bushing housings (14) formed along the whole length of x-axis onto the centering body (11) thanks to the mounting recesses (15) formed mutually. The bearing bushing housings (14) formed along the whole length of x-axis can be formed with a single cutter by drilling in one process. Optionally, they can be formed by drilling at different sides with one or two cutters in two processes.

The spider body (17) is fitted between the connection flanges (12) disposed on the centering body (11) according to the invention by means of the mounting recesses (15). Mounting recesses (15) are formed on the inner curved surface (22) of the centering body (11) and in the bearing bushing housing (14) section (See Figure 3.1). As the distance between of the connection flanges (12) is fixed, the spider body (17) can only be embedded thanks to the mounting recess (15) formed in the inner section on the connection flanges (12). Thanks to the mounting recess (15) formed, the spider arms (18) can be fitted between the connection flanges (12). As the flanges are disconnected with the body, this recess form is not available in the prior art. After the mutual spider arms (18) are fitted into the bearing bushing housings (14) of the spider bearing (16) disposed on the connection flanges (12), the spider bearings (16) are fitted at the outer section of the connection flanges (12).

To mount spider body (17) to the centering body (11), the arms (18) should be push obliquely into the bearing bushing housing (13), then slowly tilted to the straight position. Finally, other arm (18) should be inserted into the bearing bushing housing (13). However, reinforcement forms (23) of spider body (17) contacts the surface when tilting and that prevent spider from coming straight position. Thanks to the configured mounting recess (15) enable continuation of tilt movement until spider body (17) and arms (18) from comes straight position.

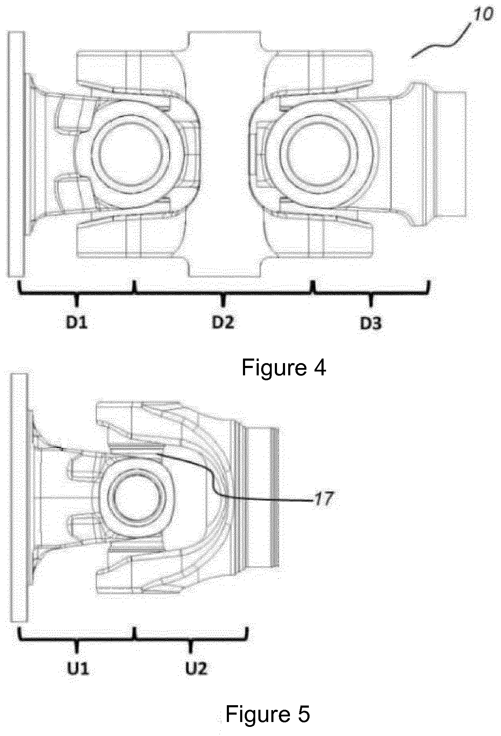

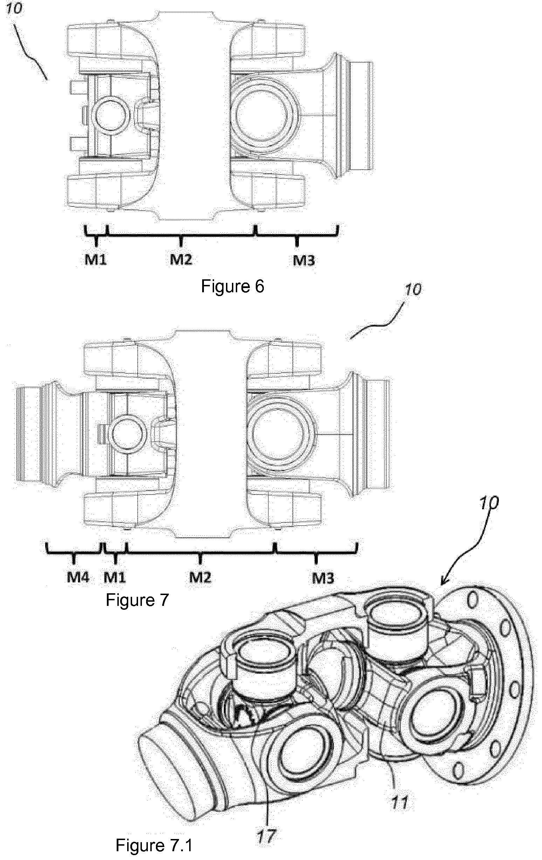

In Figure 4, 6 and 7, the complete mounted view of the double cardan joints (10) are illustrated. In the double cardan joints (10); the length (D1+D2+D3) on the axis is longer than the standard cardan joint length (U1+U2). Of the cardan shafts with double cardan joints and standard cardan joints to be formed in case the other parts are same, the one with cardan joints will be shorter. Mechanical type (wing type) connections used to minimize the disadvantage of the double cardan shafts being longer in the axial direction are preferred. Although this connection type can be provided only with fragmentary designs in the current products, with the embodiment of the invention an integrated body is formed by protecting the advantages of this connection type. Thanks to the mounting recesses on the body formed, the spider body can be fitted between the mechanically connected flanges along the x-axis as the mounting steps are shown in detail in the figure. By means of the spider bearings inserted into the housings from the outer surfaces along the x-axis after the spider body is fitted between the flanges, the spider body can be connected with the integrated centering body. Fitted into their housings, the spider bearings are prevented from displacing from their housings opposite to the entry direction by being fixed with segment placement and compression operations. In Figure 7.1, on the other hand, the perspective view showing the position of the centering body (11) used in the double cardan joint (10) according to the invention is illustrated.

Mounting steps of the embodiment according to the invention are as follows;
- The spider body is fitted between the flanges on the integrated body such that first one arm thereof will enter from inside the corresponding housing.
- While the spider arm is entering into the housing, the other spider arm is positioned towards the corresponding housing.
- The mounting recesses formed in the inner section of the mounting flanges provide the spider arm to enter more into the housing and similarly the other arm to be fitted into the housing.
- After the spider arms are positioned inside the housing, the spider body is centered between the housings along the x-axis.
- After the spider is centered, spider bearings are fitted at the outer section and the connection of the centering body and the spider body is achieved.
- Displacement of the spider bearings opposite to the entry direction by using segment placement and compression methods.

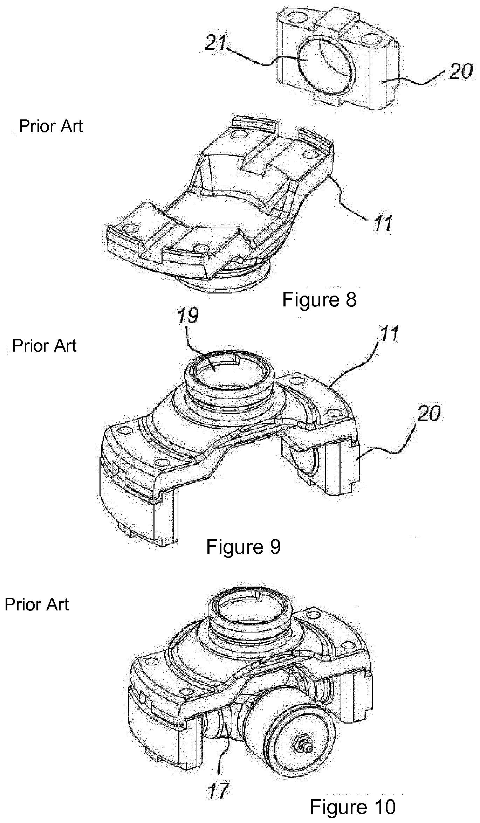

In Figures 8, 9 and 10 the views of the embodiment of the prior art are illustrated. The centering body (11) of the prior art does not have integrated bushing housings. In other words, spider body (17) cannot be mounted directly to the centering body (11). First, a separate bearing bushing piece (20) is produced and positioned on the mutual spider arms (18) by fitting the spider bearings (16) into the housing. The spider body (17) is suitably fitted onto the complete lower centering body (11) formed with spider bearings (16) and bushing components (20) and fixed by using connection elements such as bolt. This application made in the prior art leads to a high production process and labor.

In Figure 8, mechanical connection machining (13) of the prior art is illustrated. It is a connection type comprising two bolt holes on the bearing bushing component and the detail of the protrusion at the center of the holes. It has a certain standard. Accordingly, the bearing bushing piece is machined as male and the connection piece on the vehicle is machined as female and the interconnection thereof is achieved. While in the spideres with standard mechanical connection (wing type) this mechanical connection machining is made to a single side, in the double cardan joint applications it is applied to both sides for the connection of the centering piece as well. Thereby, while the centering piece machined in female form is connected to one side of the bearing bushing piece, the two sides of which are machined in male form, the other side matches with another piece on the vehicle again formed in female form at the other side is achieved, and the joint is connected to the vehicle and torque transfer is provided.

Mounting steps of the prior art are as follows.
- Spider bearings (16) are driven in the bearing housing (21) of the bearing bushing components (20) or in an alternative embodiment the spider bearing and the bearing bushing piece are produced in an integrated manner.
- Bearing bushing components (20) are fitted on the mutual spider arms (18).
- The spider body (17) is suitably fitted onto the complete lower centering body (11) formed with spider bearings (16) and bushing components (20).
- The mounted part formed is fixed by using connection elements such as bolt.

## Claims

1. A centering body (11) which can provide a spider body (17) having spider arms (18) to be embedded in a manner to rotate in the double cardan joints (10), the centering body (11) comprising connection flanges (12) with an extension integrated with said centering body (11), bearing bushing housings (14) which are formed for embedding the spider arms (18) to said connection flanges (12), the centering body (11) being **characterized in** mounting recesses (15) formed in a curved surface (22) extending between said connection flanges (12) in the area of the bearing bushing housings (14), whereby the mounting recesses (15) allow for mounting in the position of the spider body (17) and spider arms (18) to said bearing bushing housings (14).

2. The centering body (11) as in Claim 1, **characterized in** comprising bearing bushing housings (14) which are formed along the whole length of x-axis of said centering body (11).

3. A production method of centering body (11) which can provide a spider body (17) having spider arms (18) to be embedded in a manner to rotate in the double cardan joints (10), **characterized in** comprising the process steps of;
- forming connection flanges (12) in a manner to be integrated with said centering body (11);
- forming the bearing bushing housings (14) for embedding the spider arms (18) to said connection flanges (12);
- forming mounting recesses (15) in an inner curved surface (22) extending between said connection flanges (12), in the area of the bearing bushing housings (14) providing ease of mounting for the positioning of said spider arms (18).

4. The production method of centering body (11) as in Claim 3 **characterized in** comprising the process step of forming said bearing bushing housings (14) along the whole length of the same x-axis by drilling with a single cutter in a single process.

## Patentansprüche

1. Zentrierkörper (11), der eine Kreuzgarnitur (17) bereitstellen kann, mit Kreuzarmen (18), welche so eingebettet sind, dass diese sich in dem Doppelkardan (10) drehen, Zentrierkörper (11), bestehend aus Anschlussflanschen (12) mit einer Verlängerung, welche in den genannten Zentrierkörper (11) integriert sind, Lagerbuchsengehäuse (14), welche zum Einbetten der Kreuzarme (18) an die genannten Anschlussflanschen (12) geformt sind,
der Zentrierkörper (11), **dadurch gekennzeichnet, dass** Befestigungsaussparungen (15) in einer gekrümmten Oberflache (22) ausgebildet sind, welche sich zwischen diesen Anschlussflanschen (12) im Bereich der Lagerbuchsengehäuse (14) erstreckt,
wodurch
die Befestigungsaussparungen (15) die Montage in die Position des Kreuzkörpers (17) und der Kreuzarme (18) zu den genannten Lagerbuchsengehäusen (14) ermöglichen.

2. Zentrierkörper (11) wie in Anspruch 1, **dadurch gekennzeichnet, dass** dieser aus Lagerbuchsengehäusen (14) besteht, welche entlang der gesamten Länge der x-Achse des genannten Zentrierkörpers (11) ausgebildet sind.

3. Herstellungsverfahren des Zentrierkörpers (11), der eine Kreuzgarnitur (17) mit Kreuzarmen (18) bereitstellen kann, welche so eingebettet sind, dass diese sich in dem Doppelkardan (10) drehen, **dadurch gekennzeichnet, dass** dieses folgende Prozessschritte umfasst;
- die Formung von Anschlussflanschen (12), so, dass diese in den Zentrierkörper (11) integriert werden;
- die Formung der Lagerbuchsengehäuse (14) zum Einbetten der Kreuzarme (18) an die genannten Anschlussflanschen (12);
- die Formung von Befestigungsaussparungen (15) in einer inneren gekrümmten Oberfläche (22), die sich im Bereich der Lagerbuchsengehäuse (14) zwischen den genannten Anschlussflanschen (12) erstreckt, um eine einfache Montage für die Positionierung der genannten Kreuzarme (18) zu ermöglichen.

4. Herstellungsverfahren des Zentrierkörpers (11) gemäß Anspruch 3, **darin gekennzeichnet, dass** dieses den Prozessschritt des Formens der Lagerbuchsengehäuse (14) entlang der gesamten Länge derselben x-Achse durch Bohren mit einem einzigen Fräser in einem einzigen Prozess umfasst.

## Revendications

1. Un corps de centrage (11) qui peut fournir un corps d'araignée (17) ayant des bras d'araignée (18) à encastrer de manière à tourner dans les articulations à double cardan (10), le corps de centrage (11)
comprenant des brides de connexion (12) avec une extension intégrée audit corps de centrage (11), des logements de douilles de roulement (14) qui sont formés pour encastrer les bras d'araignée (18) dans lesdites brides de connexion (12), le corps de centrage (11) **étant caractérisé par** des évidements de montage (15) formés dans une surface incurvée (22) s'étendant entre lesdites brides de connexion (12) dans la zone des logements de douilles de palier (14), grâce à quoi les évidements de montage (15) permettent un montage dans la position du corps d'araignée (17) et des bras d'araignée (18) vers lesdits logements de douilles de palier (14).

2. Corps de centrage (11) selon la revendication 1, **caractérisé en ce qu'**il comprend des logements de douilles de palier (14) qui sont formés sur toute la longueur de l'axe x dudit corps de centrage (11).

3. Procédé de production de centrage du corps (11) qui peut fournir un corps d'araignée (17) ayant des bras d'araignée (18) à incorporer de manière à tourner dans les articulations à double cardan (10), **caractérisé en ce qu'**il comprend les étapes de processus consistant à:
- former des brides de connexion (12) de manière à être intégrées audit corps de centrage (11);
- former les logements de douilles de palier (14) pour encastrer les bras d'araignée (18) dans lesdites brides de connexion (12);
- former des évidements de montage (15) dans une surface intérieure incurvée (22) s'étendant entre lesdites brides de connexion (12), dans la zone de logement de douille de palier (14), ce qui facilite le montage pour le positionnement desdits bras d'araignée (18).

4. Procédé de production de centrage du corps (11) selon la revendication 3, **caractérisé en ce qu'**il comprend l'étape de processus consistant à former lesdits logements de douilles de palier (14) sur toute la longueur du même axe x par perçage avec une seule couteau en un seul processus.
